(19) Europäisches Patentamt
European Patent Office
Office européen des brevets

(11) EP 4 269 130 B1

(12) # EUROPEAN PATENT SPECIFICATION

(45) Date of publication and mention of the grant of the patent:
**29.07.2026 Bulletin 2026/31**

(21) Application number: **21914982.0**

(22) Date of filing: **26.10.2021**

(51) International Patent Classification (IPC):
***B60C 1/00*** *(2006.01)* ***B60C 3/04*** *(2006.01)*
***B60C 9/18*** *(2006.01)* ***B60C 9/20*** *(2006.01)*
***B60C 11/13*** *(2006.01)* ***B60C 11/03*** *(2006.01)*

(52) Cooperative Patent Classification (CPC):
**B60C 3/04; B60C 11/033;** B60C 2001/0066; B60C 2009/2061; B60C 2009/2064; B60C 2009/2077; B60C 2009/2083; B60C 2011/0341; B60C 2011/0353; B60C 2011/0355; B60C 2011/0358; B60C 2011/0365; B60C 2011/0367; Y02T 10/86

(86) International application number:
**PCT/JP2021/039501**

(87) International publication number:
**WO 2022/145121 (07.07.2022 Gazette 2022/27)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2020 JP 2020218124**

(43) Date of publication of application:
**01.11.2023 Bulletin 2023/44**

(73) Proprietor: **Sumitomo Rubber Industries, Ltd.**
**Kobe-shi, Hyogo 651-0072 (JP)**

(72) Inventors:
- **MISAKI Momoka**
  **Kobe-shi, Hyogo 651-0072 (JP)**
- **DONG Miao**
  **Kobe-shi, Hyogo 651-0072 (JP)**
- **KAWAI Hiroki**
  **Kobe-shi, Hyogo 651-0072 (JP)**

(74) Representative: **TBK**
**Bavariaring 4-6**
**80336 München (DE)**

(56) References cited:

| | |
|---|---|
| **JP-A- 2001 334 809** | **JP-A- 2007 015 638** |
| **JP-A- 2008 156 418** | **JP-A- 2008 189 048** |
| **JP-A- 2010 089 727** | **JP-A- 2013 122 038** |
| **JP-A- 2015 511 197** | **JP-A- 2016 210 388** |
| **JP-A- 2016 210 388** | **JP-A- 2017 052 329** |
| **JP-B1- 6 769 573** | **JP-B1- 6 769 573** |
| **US-A- 5 858 137** | **US-A1- 2014 228 495** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 269 130 B1

## Description

[TECHNICAL FIELD]

The present invention relates to pneumatic tires, and more particularly to pneumatic tires with belt layers.

[BACKGROUND ART]

In recent years, from the viewpoint of increasing interest in environmental issues and economic efficiency, there has been a strong demand for lower fuel consumption in automobiles, and for improved fuel efficiency of pneumatic tires (hereinafter, simply referred to as "tires") installed in automobile as well.

The fuel efficiency of a tire can be evaluated by rolling resistance, and it is known that the smaller the rolling resistance, the better the fuel efficiency of the tire.

Therefore, conventionally, it has been proposed to reduce the rolling resistance by devising the compounding of the rubber composition that constitutes the tread portion of the tire (for example, Patent documents 1 to 4).

Patent document 5 discloses a pneumatic tire equipped with a carcass, a tread part, and a belt which is disposed between them and composed of at least two belt layer forming a reinforcing part. A first belt layer of the first layer of the belt and a second layer of the second belt layer are arranged in a belt width direction in parallel and are buried in a coating rubber making a bundle that 5-7 mono-filament cords having a filament diameter of 0.18-0.26 mm are aligned as a unit. A gauge of the rubber layer between the first belt layer at the end part of the second belt layer and the mono-filament cord of the second belt layer is 1.3-3.0 times the gauge at a central part of the tire, and the value of tan$\delta$ at 30°C of the tread rubber composing the tread part is 0.080 or more and 0.60 or less.

Patent document 6 discloses a pneumatic tire for a passenger car, which includes a circumferential belt of at least one layer, which is made of a rubber-covered layer of a steel cord wound around a crown part in the circumferential direction of the tire in a sequential order from the radial inside of the tire, and inclined belts and of at least one layer, which is made of a rubber-covered layer of an organic fiber cord arranged in a direction making an angle of $\pm$20-60° with respect to the circumferential direction of the tire.

Patent document 7 discloses a rubber composition for a tire cord topping, a breaker edge strip, a breaker cushion, or a strip adjacent to cords, which achieves a balanced improvement in handling stability, fuel economy, durability, ride quality, and adhesion; and pneumatic tires including the same. The rubber composition includes: an isoprene-based rubber; a phenol resin and/or an alkylphenol resin; and a partial condensate of HMMM and/or a partial condensate of HMMPME, wherein an amount of the isoprene-based rubber is 60% by mass or higher per 100% by mass of the rubber component; and a combined amount of the phenol resin and the alkylphenol resin is 2-3.9 parts by mass, a combined amount of the partial condensate of HMMM and the partial condensate of HMMPME is 0.5-5 parts by mass, and an amount of silica is at most 15 parts by mass, each per 100 parts by mass of the rubber component.

Patent document 8 discloses a narrow, large-diameter tire that can improve noise performance during high-speed driving without impairing handling performance at low temperatures. The tire has a tread portion made of an elastomer composition.

Patent document 9 discloses a pneumatic radial tire, which includes at least two belt plies reinforced with steel monofilaments inclined at an angle of 10° to 10° with respect to the equatorial plane of the tire, the monofilaments being laid at an end count ranging from 25 to 60 ends per inch and having a diameter of from 0.25 to 0.40 mm, a tensile strength of at least 4080 MPa-(2000xD)x95 percent where D is the filament diameter in millimeters and a fatigue resistance of at least 3500 cycles as measured by the three-roll bending fatigue test. Preferably, the filament diameter ranges from 0.30 to 0.35 mm, the tensile strength of each monofilament is at least 4400 MPa-(2000xD)x95 percent and the fatigue resistance ranges from 3500 to 6000 cycles.

[Prior art documents]

[Patent document]

[Patent document 1] JP 2018-178034 A
[Patent document 2] JP 2019-089911 A
[Patent document 3] WO 2018/186367 A
[Patent document 4] JP 2019-206643 A
[Patent document 5] JP 2008-189048 A
[Patent document 6] JP 2016-210388 A

[Patent document 7] US 2014/228495 A1
[Patent document 8] JP 6 769573 B1
[Patent document 9] US 5858137 A

[SUMMARY OF THE INVENTION]

[PROBLEMS TO BE SOLVED BY THE INVENTION]

However, with the development of expressways in recent years, opportunities to travel long distances at high speeds have increased dramatically. Under this circumstance, it cannot be said that the above-mentioned conventional technology is not sufficient to improve low rolling resistance during high-speed running. In addition, there was a problem that the steering stability deteriorated.

Accordingly, an object of the present invention is to provide a pneumatic tire that further improves low rolling resistance during high-speed running and further suppresses deterioration in steering stability during high-speed running.

[MEANS FOR SOLVING THE PROBLEM]

The present inventors have conducted intensive studies on how to solve the above problems, found that the above problems can be solved by the invention described below, and completed the present invention.

This object is achieved by a pneumatic tire having the features of claim 1. Advantageous further developments are defined in the dependent claims.

[EFFECT OF THE INVENTION]

According to the present invention, it is possible to provide a pneumatic tire that further improves low rolling resistance during high-speed running and further suppresses deterioration in steering stability during high-speed running.

[EMBODIMENTS FOR CARRYING OUT THE INVENTION]

[1] Features of the tire according to the present invention

First, the features of the tire according to the present invention will be described.

1. Overview

The tire according to the present invention is a tire having a belt layer, and the reinforcement cords in the belt layer are composed of monofilament cords which are arranged in the tire width direction at 50 cords / 5 cm or more in the tire radial cross section of the belt layer.
and has an internal pressure of 250 kPa

Further, when the tire according to the present invention is installed on a standardized rim and the internal pressure is 250 kPa, the cross-sectional width of the tire Wt (mm) and the outer diameter of the tire Dt (mm) satisfy the following (formula 1).

$$1660 \leqq (Dt^2 \times \pi/4) / Wt \qquad \text{(formula 1)}$$

By having these features, as will be described later, it is possible to provide a pneumatic tire that further improves low rolling resistance during high-speed running and further suppresses deterioration in steering stability during high-speed running.

Here, the above mentioned "standardized rim" is a rim defined for each tire in the standard system including the standard on which the tire is based. For example, in the case of the above mentioned JATMA (Japan Automobile Tire Manufacturers Association), standard rims in applicable sizes described in "JATMA YEAR BOOK", in the case of ETRTO (The European Tire and Rim Technical Organization), "Measuring Rim" described in "STANDARDS MANUAL", and in the case of TRA (The Tire and Rim Association, Inc.), "Design Rim" described in "YEAR BOOK" mean the "regular rim". In the case of tires that are not specified in the standard, it means a rim having the smallest rim diameter, and then having the narrowest width among the rims which can be assembled and the internal pressure can be maintained, that is, rims not causing air leakage between the rim and the tire.

In the above description, the outer diameter Dt of the tire is the outer diameter of the tire when the tire is installed

on a standardized rim, the internal pressure is set to 250 kPa and no load is applied, and the tire cross-sectional width Wt is the linear distance between the sidewalls including all the patterns, characters, etc. on the tire side surface (the total width of the tire) and excluding patterns, characters, etc. on the tire side surface, when the tire is installed on a standardized rim, the internal pressure is set to 250 kPa and no load is applied.

2. Mechanism of Manifestation of Effect in Tires according to the present invention

The mechanism by which the tire according to the present invention manifests its effects, that is, the mechanism by which the low rolling resistance during high-speed running is further improved and the deterioration of steering stability during high-speed running is further suppressed is presumed as follows.

As described above, in the present invention, the cross-sectional width Wt (mm) and the outer diameter Dt (mm) of the tire satisfy

$$1660 \leqq (Dt^2 \times \pi/4) / Wt \text{ (formula 1)}.$$

It is considered that, by increasing ratio of the area of the tire when viewed from the lateral direction [$(Dt/2)^2 \times \pi) = (Dt^2 \times \pi/4)$] to the cross-sectional width Wt of the tire, specifically, by increasing it to 1500 or more, the tire inertia moment can be increased and the rolling resistance during steady state can be reduced. The above $(Dt^2 \times \pi/4) / Wt$ is more preferably 1541 or more, further preferably 1544 or more, further preferably 1546 or more, further preferably 1549 or more, further preferably 1554 or more, further preferably 1,600 or more, further preferably 1,660 or more, further preferably 1,662 or more, further preferably 1,666 or more, further preferably 1,671 or more, further preferably 1,700 or more, further preferably 1748 or more, further preferably 1800 or more, further preferably 1963.4 or more, and further preferably 2075 or more.

However, with such a tire, the centrifugal force is generally likely to increase, and the tread portion may be deformed into a round shape during high-speed running, resulting in worsening of rolling resistance. In addition, when running at high speeds, the outer diameter tends to increase as the centrifugal force increases, which may lead to a decrease in steering stability.

Therefore, in the present invention, in the belt layer that constrains the tread portion, a cord (monofilament cord) made of monofilament (single wire) is used as a reinforcing cord instead of a cord (twisted wire cord) made of twisted wire. Since the monofilament cord is not twisted, it is less likely to be elongated and deformed, and has an excellent function to constrain. It is considered that, by adopting a belt layer in which such monofilament cords are densely arranged with 50 or more per 5 cm, that is, with intervals of 1 mm or less per cord, the tread is sufficiently constrained during high-speed running, so the deformation of the tread caused by centrifugal force is sufficiently suppressed, and low rolling resistance can be improved.

In addition, when such a belt layer is used, the deformation of the profile shape of the tread portion is reduced and the responsiveness to shear deformation of the belt layer is increased, so it is considered that the steering stability during high-speed running can be improved and the deterioration of steering stability during high-speed running can be suppressed.

The cord outer diameter of the monofilament cord is preferably 0.1 mm or more and 0.5 mm or less. More preferably, it is 0.25 mm or more and 0.40 mm or less. If the cord outer diameter is too small, there is a possibility that the cords may not constraint sufficiently even if they are arranged densely. On the other hand, if the cord is too thick, it will be difficult to cover the monofilament cord with rubber without any gaps, and shear deformation will be less likely to occur, making it difficult to obtain sufficient steering stability during high-speed running.

[2] More preferred aspects of the tire according to the present invention

The tire according to the present invention can obtain even greater effects by adopting the following aspects.

1. Relationship between the physical properties of the coated rubber composition and the arranged number of reinforcement cords

In the tire according to the present invention, regarding the rubber composition covering the reinforcing cords in the belt layer, the complex elastic modulus E* (MPa) measured under the conditions of temperature of 70 °C, initial strain of 5%, dynamic strain of ±1%, frequency of 10 Hz and deformation mode: stretching, the loss tangent (tan δ) measured under the conditions of temperature of 70 °C, initial strain of 5%, dynamic strain of ±1%, frequency of 10 Hz and deformation mode: tensile, and the number e (cords) of reinforcing cords arranged per 5 cm in the tire width direction in the tread portion preferably satisfy $[(\tan\delta / E^*) / e] \times 1000 \leqq 0.2$ (formula 4).

When the tread portion of the tire is deformed during rolling, heat is generated in the belt layer. At this time, if the number of reinforcing cords arranged per 5 cm (hereinafter also referred to as "ends") is not appropriate, the covering rubber layer may be softened and the steering stability may be lowered.

Therefore, the relation of (tan $\delta$ / E*), which is an index related to the heat generation of the belt layer and the ends (e) was examined. As a result, if $[(\tan\delta / E^*) / e] \times 1000 \leq 0.2$ (formula 4) is satisfied, heat generation of the belt layer due to deformation of the tread portion during rolling is suppressed, and softening is suppressed. In addition, it turned out that the rigidity of the belt layer can be maintained satisfactorily, the deformation and the increase in heat generation of the belt layer can be suppressed, and both low rolling resistance and steering stability can be achieved. Further, it turned out that $[(\tan\delta / E^*) / e] \times 1000$ is more preferably 0.18 or less, further preferably 0.15 or less, further preferably 0.13 or less, and further preferably 0.12.

The number of arranged monofilaments (ends) refers to the average number of arranged cords per 5 cm of the cords arranged in the tire width direction in a standardized rim with an internal pressure of 250 kPa and in a no load state. It can be obtained by measuring the number of cords arranged in a width of 5 to 10cm centered on the tire equatorial plane on a section cut out in the tire radial direction with a thickness of 2 to 4 cm, and calculating the average number of cords per 5 cm. The ends e (cords / 5 cm) is more preferably 55 / 5 cm or more, further preferably 75 / 5 cm or more, and further preferably 90 / 5 cm or more.

Here, the complex elastic modulus E* (MPa) and loss tangent (tan $\delta$) can be measured, for example, using a viscoelasticity measuring device such as "Eplexor (registered trademark)" manufactured by GABO. The specific complex elastic modulus E* (MPa) is preferably 8.7 MPa or more, more preferably 9.4 MPa or more, and further preferably 10.5 MPa or more. Further, the specific loss tangent (tan $\delta$) is preferably 0.08 or more, more preferably 0.10 or more, and further preferably 0.13 or more.

Specifically, (tan $\delta$ / E*) is preferably 0.002 or more and 0.017 or less, more preferably 0.015 or less, further preferably 0.014 or less, further preferably 0.01 or less, and further preferably 0.009 or less.

2. Multi-layered belt layer

In the present invention, the belt layer is multilayered by providing at least two layers. In at least one set of belt layers adjacent in the radial direction of the tire, the average distance D (mm) between the cords in each belt layer in the tread portion is preferably 0.6 mm or less, more preferably 0.5 mm or less, further preferably 0.45 mm or less, and further preferably 0.22 mm or less.

As a result, one set of belt layers cooperates with each other to appropriately constrain the tread portion and suppress the amount of deformation of the tread portion during rolling, and low rolling resistance and steering stability can be maintained at high-speed running.

When the belt layers are multi-layered, at least one belt layer should satisfy the above-described relationship about "$[(\tan\delta / E^*) / e] \times 1000$".

In the case of multilayered belt layers, in at least one set of belt layers adjacent in the radial direction of the tire, the angle formed by the cords in the belt layers in the tread portion on the tire circumferential direction is 65° or less, more preferably 60° or less, further preferably 58° or less, and further preferably 46° or less.

By arranging belt layers inclined to each other at an appropriate angle, a hoop effect can be obtained, and almost the entire width of the tread portion can be tightly restrained, thereby suppressing the amount of deformation of the tread portion during rolling, and low rolling resistance and steering stability can be maintained during high-speed running.

The above (tan $\delta$ / E*) and the average distance D (mm) between the cords satisfy $(\tan\delta / E^*) \times D \times 1000 \leqq 8.0$ (formula 6). The $(\tan\delta / E^*) \times D \times 1000$ is more preferably 6.2 or less, further preferably 4.3 or less, further preferably 4.1 or less, and further preferably 3.0 or less. As a result, the suppression of heat generation of the belt layer and the restraint of the tread portion by the belt layer act appropriately, and low rolling resistance and steering stability can be maintained during high-speed running.

3. Grooves in the tread

Preferably, the tire according to the present invention has a circumferential groove extending continuously in the tire circumferential direction in the tread portion. It is preferable that the ratio ($L_{80}/L_0$) of the groove width $L_{80}$ at a depth of 80% of the maximum depth of the circumferential groove to the groove width $L_0$ of the circumferential groove on the contact surface of the tread portion is preferably 0.2 or more and 0.7 or less. As a result, the movement of the entire land portion can be suppressed at the bottom surface of the land portion of the tread portion, thereby uneven wear of the tread portion can be suppressed and the durability can be improved sufficiently during high-speed running. $L_{80}/L_0$ is preferably 0.35 or more, more preferably 0.40 or more, and further preferably 0.45 or more. Also, it is preferably 0.65 or less, more preferably 0.60 or less, and further preferably 0.55 or less.

The above-mentioned L0 and L80 refer to the linear distance (L0) between the groove end portions at the tread

surface portion and the minimum distance (L80) between the groove walls at a groove depth of 80%, respectively, of the tread circumferential groove in a tire installed on a standardized rim, having internal pressure of 250 kPa and in a no-load state. Simply put, it is possible to obtain in a state where the bead portion of the section cut out in the tire radial direction with a width of 2 to 4 cm is pressed down according to the corresponding rim width.

Preferably, the tread portion has a plurality of circumferential grooves, and the total cross-sectional area of the plurality of circumferential grooves is 10% or more and 30% or less of the cross-sectional area of the tread portion. As a result, movement of the tread portion can be suppressed, and uneven wear of the tread portion during high-speed running can be suppressed and durability can be improved sufficiently. It is more preferably 15% or more and 27% or less, further preferably 18% or more and 25% or less, and particularly preferably 21% or more and 23% or less.

The cross-sectional area of the circumferential groove described above refers to the total value of the area composed of a straight line connecting the end portions of the circumferential groove of the tread and a groove wall in a tire installed on a standardized rim, having an internal pressure of 250 kPa and in a no-load state. It can be simply obtained in a state where the bead portion of the section cut out in the tire radial direction with a width of 2 to 4 cm is pressed down according to the rim width.

The cross-sectional area of the tread portion refers to the area outside the tire radial direction from the belt layer in the region separated by a straight line connecting the circumferential groove ends of the tread portion and two straight lines parallel to the equatorial plane that pass through both ends of the widest among the tread surface profile formed by the tread surface and belt layer, in the radial cross section of the tire installed on a standardized rim, having an internal pressure of 250 kPa and in no-load state. When the belt reinforcing layer using organic fibers and/or steel cords is provided on the outer side in the radial direction of the tire from the belt layer, it refers to the area on the outer side in the radial direction from the belt reinforcing layer.

Further, it is preferable that the tread portion has a plurality of lateral grooves extending in the tire axial direction, and the total volume of the plurality of lateral grooves is 2.0% or more and 5.0% or less of the volume of the tread portion. As a result, movement of the tread portion can be suppressed, thereby uneven wear of the tread portion can be suppressed and durability can be improved sufficiently. It is more preferably 2.2% or more and 4.0% or less, further preferably 2.5% or more and 3.5% or less, and particularly preferably 2.7% or more and 3.0% or less.

The volume of the tread portion mentioned above refers to the volume obtained by extending the area of the tread portion in the tire circumferential direction. It can be simply obtained by multiplying the area of the tread portion by the length of the outer periphery of the tire ($Dt \times \pi$). The volume includes the volume of main groove and lateral groove and is at the breaker end widest in width direction end.

In addition, the volume of the lateral groove refers to the total volume formed by the surface connecting the ends of the lateral groove and the groove wall in a tire installed on a standardized rim with an internal pressure of 250 kPa and in a no-load state. Simply put, it can be obtained by calculating the volume of each lateral groove in a state where between the bead portions of a section cut out from the tire with a width of 2 to 4 cm in the radial direction is pressed down according to the rim width, and then multiplying by the number of grooves. Further, the volume of the tread portion can be calculated by calculating the area of the portion of the tread portion that does not include the lateral grooves from the section, multiplying the result by the outer diameter, and finding the difference between the volume of the lateral grooves and the result.

In addition, from the standpoint of improving steering stability during high-speed running by generating friction with the road surface at the edges of the grooves in the width direction of the tread portion, suppressing excessive deformation of the tread portion, and increasing the reaction force generated in the tread portion, the lateral grooves preferably include a lateral groove in which the ratio of groove width Gw to groove depth Gd (Gw / Gd) is 0.50 or more and 0.80 or less. It is more preferably 0.53 or more and 0.77 or less, further preferably 0.55 or more and 0.75 or less, and particularly preferably 0.60 or more and 0.70 or less.

The groove width and groove depth of the lateral grooves described above are the straight line that is perpendicular to the groove direction and the longest among the straight lines connecting the edges of the tread surface of the lateral grooves, and the maximum depth of lateral groove in a tire with an internal pressure of 250 kPa and in a no-load state. It can be simply calculated from the state where the bead portions of a section cut out from the tire with a width of 2 to 4 cm in the radial direction are pressed down according to the rim width.

4. Tire shape

In the tire according to the present invention, when the tire is installed on a standardized rim and the internal pressure is 250 kPa, the specific outer diameter Dt (mm) is, for example, preferably 515 mm or more, more preferably 558 mm or more, further preferably 585 mm or more, further preferably 622 mm or more, further preferably 623 mm or more, further preferably 624 mm or more, further preferably 627 mm or more, further preferably 628 mm or more, further preferably 629 mm or more, further preferably 640 mm or more, further preferably 658 mm or more, and further preferably 673 mm or more. On the other hand, although the upper limit is not particularly limited, it is preferably less than 843 mm, more preferably less than 725 mm, further preferably less than 707 mm, and further preferably less than 685 mm. By

setting the outer diameter Dt within the above range, it is considered that a favorable moment of inertia can be obtained during rolling, and reaction force can be easily generated when the steering angle is set.

A specific cross-sectional width Wt (mm) is, for example, preferably 115 mm or more, more preferably 130 mm or more, further preferably 150 mm or more, further preferably 155 mm or more, further preferably 170 mm or more, further preferably 175 mm or more, further preferably 183 mm or more, further preferably 184 mm or more, further preferably 185 mm or more, and further preferably 193 mm or more. On the other hand, although the upper limit is not particularly limited, it is preferably less than 305 mm, more preferably less than 245 mm, further preferably less than 210 mm, further preferably less than 205 mm, further preferably 201 mm or less, further preferably 200 mm or less, further preferably less than 200 mm. By setting the cross-sectional width Wt within the above range, it is possible to increase the rigidity in the width direction, and it is considered that it becomes easier to obtain good steering stability during high-speed running.

A specific cross-sectional height Ht (mm) is, for example, preferably 37 mm or more, more preferably 87 mm or more, and further preferably 95 mm or more. On the other hand, it is preferably less than 180 mm, more preferably less than 112 mm, and further preferably less than 101 mm.

In addition, in the present invention, considering the stability of ride comfort during running, ($Dt-2 \times Ht$) is preferably 450 (mm) or more, more preferably 470 (mm) or more, and further preferably 480 (mm) or more. On the other hand, considering deformation of the tread portion, it is preferably less than 560 (mm), more preferably less than 530 (mm), and further preferably less than 510 (mm).

[3] Embodiment

Hereinafter, the present invention will be specifically described based on embodiments.

1. Rubber composition for belt layer

(1) Compounding material

The rubber composition constituting the belt layer of the tire according to the present invention can be obtained from the rubber component and other compounding materials, described below.

(a) Rubber component

In the present embodiment, the rubber component is not particularly limited, and rubbers (polymers) commonly used in the manufacture of tires, such as isoprene-based rubber, butadiene rubber (BR), styrene-butadiene rubber (SBR), diene-based rubber such as nitrile rubber (NBR), butyl-based rubber such as butyl rubber, and the like can be used. Among these, isoprene-based rubbers are preferable, and NR is preferably used because the cis structure of polyisoprene is close to 100% and the tensile strength is superior to other rubber components. Note that BR and SBR may be used together as necessary.

(a-1) Isoprene rubber

The content (total content) of the isoprene-based rubber in 100 parts by mass of the rubber component is preferably 60 parts by mass or more, more preferably 80 parts by mass or more, and further preferably 90 parts by mass or more.

Examples of isoprene-based rubbers include natural rubber (NR), isoprene rubber (IR), reformed NR, modified NR, and modified IR, but NR is preferable from the viewpoint of excellent strength.

As NR, for example, those commonly used in the tire industry, such as SIR20, RSS#3, and TSR20, can be used. The IR is not particularly limited, and for example, those commonly used in the tire industry such as IR2200 can be used. Examples of reformed NR include deproteinized natural rubber (DPNR), and high-purity natural rubber (UPNR). Examples of modified NR include epoxidized natural rubber (ENR), hydrogenated natural rubber (HNR), and grafted natural rubber. Examples of modified IR include epoxidized isoprene rubber, hydrogenated isoprene rubber, and grafted isoprene rubber These may be used alone or in combination of two or more.

(a-2) BR

In the present embodiment, 5 parts by mass or more and 25 parts by mass or less of BR may be used together with NR in the rubber component, if necessary.

The weight average molecular weight of BR is, for example, more than 100,000 and less than 2,000,000. The vinyl bond content (1,2-bonded butadiene unit content) of BR is, for example, more than 1% by mass and less than 30% by

mass. The cis content of BR is, for example, more than 1% by mass and 98% by mass or less. The trans content of BR is, for example, more than 1% and less than 60% by mass. The cis content can be measured by infrared absorption spectrometry.

BR is not particularly limited, and BR with high cis content (90% or more of cis content), BR with low cis content, BR containing syndiotactic polybutadiene crystals, and the like can be used. BR may be either unmodified BR or modified BR, and modified BR may be, for example, S-modified BR modified with a compound (modifying agent) represented by the following formula.

[Chemical 1]

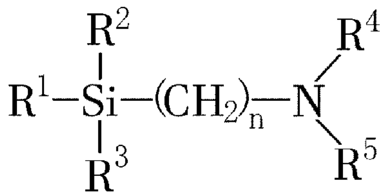

In the formula, $R^1$, $R^2$ and $R^3$ are the same or different and represent an alkyl group, alkoxy group, silyloxy group, acetal group, carboxyl group (-COOH), mercapto group (-SH) or derivatives thereof. $R^4$ and $R^5$ are the same or different and represent a hydrogen atom or an alkyl group. $R^4$ and $R^5$ may combine to form a ring structure with the nitrogen atom. n represents an integer.

Examples of modified BR modified with the compound (modifier) represented by the above formula include BR whose polymer terminal (active terminal) has been modified with the compound represented by the above formula.

$R^1$, $R^2$ and $R^3$ are preferably alkoxy groups (preferably an alkoxy group having 1 to 8 carbon atoms, and more preferably an alkoxy group having 1 to 4 carbon atoms). An alkyl group (preferably an alkyl group having 1 to 3 carbon atoms) is suitable for $R^4$ and $R^5$. n is preferably 1-5, more preferably 2-4, and further preferably 3. Also, when $R^4$ and $R^5$ combine to form a ring structure with a nitrogen atom, it is preferably a 4- to 8-membered ring. The alkoxy group also includes a cycloalkoxy group (cyclohexyloxy group, etc.) and an aryloxy group (phenoxy group, benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

As modified BR, modified BR modified with the following compounds (modifying agents) can also be used. Examples of the modifier include

polyglycidyl ethers of polyhydric alcohols such as ethyleneglycol diglycidyl ether, glycerin triglycidyl ether, trimethylolethane-triglycidyl ether and trimethylolpropane triglycidyl ether;

polyglycidyl ether of aromatic compound having two or more of phenol group such as diglycidylated bisphenol A;

polyepoxy compounds such as 1,4-diglycidylbenzene, 1,3,5-triglycidylbenzene, and polyepoxidized liquid polybutadiene;

epoxy group-containing tertiary amines such as 4,4'-diglycidyldiphenylamine and 4,4'-diglycidyldibenzyl-methylamine;

diglycidylamino compounds such as diglycidylaniline, N, N'-diglycidyl-4-glycidyloxyaniline, diglycidylorthotoluidine, tetraglycidylmetaxylene diamine , tetraglycidylaminodiphenylmethane, tetraglycidyl-p-phenylenediamine, diglycidylaminomethylcyclohexane and tetraglycidyl-1,3-bisaminomethyl cyclohexane;

amino group-containing acid chlorides such as bis-(1-methylpropyl) carbamate chloride, 4-morpholincarbonyl chloride, 1-pyrrolidincarbonyl chloride, N, N-dimethylcarbamate chloride and N, N-diethylcarbamate chloride;

epoxy group-containing silane compounds such as 1,3-bis-(glycidyloxypropyl)tetramethyldisiloxane and (3-glycidyloxypropyl) - pentamethyldisiloxane;

sulfide group-containing silane compounds such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;

N-substituted aziridine compound such as ethyleneimine and propyleneimine; alkoxysilanes such as methyltriethoxy silane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane and N, N-bis (trimethylsilyl) aminoethyltriethoxysilane;

(thio) benzophenone compounds having an amino group and / or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone and N, N, N', N'-bis-(tetraethylamino) benzophenone;
benzaldehyde compounds having an amino group and / or a substituted amino group such as 4-N, N-dimethylaminobenzaldehyde, 4-N, N-diphenylaminobenzaldehyde and 4-N, N-divinylamino benzaldehyde;
N-substituted pyrrolidone such as N-methyl-2-pyrrolidone, N-vinyl-2-pyrrolidone, N-phenyl-2-pyrrolidone, N-t-butyl-2-pyrrolidone and N-methyl-5-methyl-2-pyrrolidone;
N-substituted piperidone such as N-methyl-2-piperidone, N-vinyl-2-piperidone and N-phenyl-2-piperidone; and
N-substituted lactams such as N-methyl-e-caprolactam, N-phenyl-ε-caprolactam, N-methyl-ω-laurilolactam, N-vinyl-ω-laurillolactam, N-methyl-β-propiolactam and N-phenyl-β-propiolactam. In addition to the above, N, N-bis-(2,3-epoxypropoxy) -aniline, 4,4-methylene-bis- (N, N-glycidyl-aniline), tris-(2,3-epoxypropyl)-1,3,5-triazine-2,4,6-triones, N,N-diethylacetamide, N-methylmaleimide, N, N-diethylurea, 1,3-dimethylethyleneurea , 1,3-divinylethyleneurea, 1,3-diethyl-2-imidazolidinone, 1-methyl-3-ethyl-2-imidazolidinone, 4-N,N-dimethylaminoacetophen, 4-N,N-diethylaminoacetophenone, 1,3-bis (diphenylamino)-2-propanone, 1,7-bis (methylethylamino)-4-heptanone, and the like can be mentioned also. The modification with the above compound (modifier) can be carried out by a known method.

As the modified BR, for example, tin-modified BR can also be used. The tin-modified BR is obtained by polymerizing 1,3-butadiene with a lithium initiator followed by adding a tin compound. A tin-modified BR in which the terminal is further bonded by a tin-carbon bond is preferable.
Examples of lithium initiators include lithium-based compounds such as alkyllithium, aryllithium, vinyllithium, organotinlithium, and organonitrogen lithium compounds, and lithium metal. By using the lithium initiator as an initiator for tin-modified BR, tin-modified BR having a high vinyl content and a low cis content can be produced.
Examples of the tin compounds include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, and p-tributyltin styrene.
The content of tin atoms in the tin-modified BR is preferably 50 ppm or more, more preferably 60 ppm or more. On the other hand, it is preferably 3000 ppm or less, more preferably 2500 ppm or less, and further preferably 250 ppm or less.
Further, the molecular weight distribution (Mw/Mn) of tin-modified BR is preferably 2 or less, and more preferably 1.5 or less.
Further, the vinyl bond content in the tin-modified BR is preferably 5% by mass or more, more preferably 7% by mass or more. On the other hand, the vinyl bond content of tin-modified BR is preferably 50% by mass or less, and more preferably 20% by mass or less.
The above S-modified BR and tin-modified BR may be used alone, or two or more of them may be used in combination.
As BR, for example, products of Ube Industries, Ltd., JSR Corporation, Asahi Kasei Corporation, and Nippon Zeon Corporation can be used.

(a-3) SBR

In the present embodiment, the rubber component may optionally contain 5 to 25 parts by mass of SBR together with NR, or may be used in combination with the above BR.
The weight average molecular weight of SBR, for example, is more than 100,000 and less than 2,000,000. The styrene content of SBR is preferably more than 5% by mass, more preferably more than 10% by mass, and further more preferably more than 20% by mass. On the other hand, it is preferably less than 50% by mass, more preferably less than 40% by mass, and further more preferably less than 35% by mass. The vinyl bond amount of SBR is, for example, more than 5% by mass and less than 70% by mass. The structure identification of SBR (measurement of styrene content and vinyl bond amount) can be performed using, for example, an apparatus of the JNM-ECA series manufactured by JEOL Ltd.
The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. These may be used alone or in combination of two or more.
The modified SBR may be any SBR having a functional group that interacts with a filler such as silica. Examples thereof include terminal modified SBR (terminal modified SBR having the functional group at the end) in which at least one end of the SBR is modified with a compound having the above functional group (modifying agent),

main chain modified SBR having the functional group in the main chain, and main chain terminal modified SBR having

the functional group in the main chain and the terminal (for example, main chain terminal modified SBR having the above functional group in the main chain and at least one end modified with the above modifying agent) and terminally modified SBR which is modified (coupling) by a polyfunctional compound having two or more epoxy groups in the molecule and into which a hydroxyl group or an epoxy group has been introduced.

As the SBR, for example, SBR manufactured and sold by Sumitomo Chemical Co., Ltd., JSR Corporation, Asahi Kasei Corporation, Nippon Zeon Corporation, etc. can be used. The SBR may be used alone or in combination of two or more.

(a-4) Other rubber components

In addition, as other rubber components, if necessary, rubber (polymer) generally used for manufacturing tires such as nitrile rubber (NBR) may be included.

(b) Compounding materials other than rubber components

(b-1) Filler

In the present embodiment, the rubber composition preferably contains a filler. Specific examples of the filler include carbon black, silica, graphite, calcium carbonate, talc, alumina, clay, aluminum hydroxide, and mica. Among these, carbon black can be preferably used as the reinforcing agent. It is also preferable to use silica as a reinforcing agent, if necessary, and, in this case, it is preferable to use it together with a silane coupling agent.

(i) Carbon black

The rubber composition preferably contains carbon black. Content of carbon black is, for example, preferably 10 parts by mass or more and 100 parts by mass or less, more preferably 40 parts by mass or more and 70 parts by mass or less, and further preferably 50 parts by mass or more and 60 parts by mass or less, with respect to 100 parts by mass of the rubber component.

Carbon black is not particularly limited, and examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; and channel blacks (channel carbon blacks) such as EPC, MPC and CC. These may be used individually by 1 type, and may use 2 or more types together.

Nitrogen adsorption specific surface area ($N_2SA$) of carbon black is, for example, more than 30 $m^2/g$ and less than 250 $m^2/g$. The amount of dibutyl phthalate (DBP) absorbed by carbon black is, for example, more than 50 ml/100 g and less than 250 ml/100 g. The nitrogen adsorption specific surface area of carbon black is measured according to ASTM D4820-93, and the amount of DBP absorbed is measured according to ASTM D2414-93.

Specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(ii) Silica

The rubber composition preferably contains silica. The BET specific surface area of the silica is preferably more than 140 $m^2/g$, more preferably more than 160 $m^2/g$, from the viewpoint of obtaining good durability performance. On the other hand, from the viewpoint of obtaining good low rolling resistance at high-speed running, it is preferably less than 250 $m^2/g$, and more preferably less than 220 $m^2/g$.

Moreover, the content of the silica with respect to 100 parts by mass of the rubber component is preferably 3 parts by mass or more, and more preferably 5 parts by mass or more when the silane coupling agent is not used in combination. On the other hand, it is preferably 25 parts by mass or less and more preferably 15 parts by mass or less. When performing combined use with a silane coupling agent, it is preferably 25 mass parts or more. On the other hand, it is preferably 50 parts by mass or less, more preferably 40 parts by mass or less, and further preferably 30 parts by mass or less. The BET specific surface area mentioned above is the value of $N_2SA$ measured by the BET method according to ASTM D3037-93.

Examples of silica include dry silica (anhydrous silica) and wet silica (hydrous silica). Among them, wet silica is preferable because it has large number of silanol groups.

As the silica, for example, products of Degussa Co., Ltd., Rhodia Co., Ltd., Tosoh Silica Co., Ltd., Solvay Japan Co., Ltd., Tokuyama Corporation, etc. can be used.

(iii) Silane coupling agent

As described above, when using silica, it is possible to use a silane coupling agent together. The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive Co., Ltd.;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as y-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products of Degussa Co., Ltd., Momentive Co., Ltd., Shin-etsu Silicone Co., Ltd., Tokyo Chemical Industry Co., Ltd., Azumax Co., Ltd., Toray Dow Corning Co., Ltd., etc. can be used.
The content of the silane coupling agent is, for example, more than 3 parts by mass and less than 15 parts by mass with respect to 100 parts by mass of silica.

(iv) Other fillers

The rubber composition may further contain fillers such as graphite, calcium carbonate, talc, alumina, clay, aluminum hydroxide, and mica, which are generally used in the tire industry, in addition to the above-mentioned carbon black and silica. These contents are, for example, more than 0.1 part by mass and less than 200 parts by mass with respect to 100 parts by mass of the rubber component.

(b-2) Curable resin component

The rubber composition preferably contains a curable resin component such as modified resorcin resin and modified phenol resin. As a result, the adhesiveness to the steel cord can be improved without significantly deteriorating heat build-up and elongation at break, and a large reaction force can be easily generated in the rubber and steel cord.
Specific examples of the modified resorcin resin include Sumikanol 620 (modified resorcin resin) manufactured by Taoka Chemical Industry Co., Ltd., and examples of the modified phenol resin include PR12686 (cashew oil modified phenolic resin) manufactured by Sumitomo Bakelite Co., Ltd.
The content of the curable resin component is preferably 1 part by mass or more, and more preferably 2 parts by mass or more, with respect to 100 parts by mass of the rubber component, for example, from the viewpoint of sufficiently improving the complex elastic modulus and obtaining a large reaction force during deformation. On the other hand, from the viewpoint of maintaining breaking strength, it is preferably 10 parts by mass or less, and more preferably 8 parts by mass or less.
When using the modified resorcin resin, it is preferable to also contain a methylene donor as a curing agent. Examples of the methylene donor include hexamethylenetetramine (HMT), hexamethoxymethylol melamine (HMMM) and hexamethylol melamine pentamethyl ether (HMMPME). It is preferably contained in an amount of 5 parts by mass or more and about 15 parts by mass, with respect to 100 parts by mass of the curable resin component. If it is too small, a sufficient complex elastic modulus may not be obtained. On the other hand, if the amount is too large, the viscosity of the rubber may increase and the workability may deteriorate.
As a specific methylene donor, for example, Sumikanol 507 manufactured by Taoka Chemical Industry Co., Ltd., and the like can be used.

(b-3) Resin component

From the viewpoint of workability (imparting tackiness), the rubber composition preferably contains a resin

component as necessary. The resin component may be solid or liquid at room temperature. Specific examples of the resin components include rosin-based resin, styrene-based resin, coumarone-based resin, terpene-based resin, C5 resin, and C9 resin, C5C9 resins, and acrylic resins, and two or more of them may be used in combination. The content of the resin component is preferably more than 2 parts by mass and less than 45 parts by mass, and more preferably less than 30 parts by mass, with respect to 100 parts by mass of the rubber component.

The rosin-based resin is a resin containing rosin acid as a main component, which is obtained by processing pine fat. This rosin-based resin (rosins) can be classified according to the presence or absence of modification, and can be classified into non-modified rosin (unmodified rosin) and rosin modified product (rosin derivative). Non-modified rosins include tall rosins (also known as tall oil rosins), gum rosins, wood rosins, asymmetric rosins, polymerized rosins, hydrogenated rosins, other chemically modified rosins, and the like. The rosin-modified product is a modified product of non-modified rosin, and examples thereof include rosin esters, unsaturated carboxylic acid-modified rosins, unsaturated carboxylic acid-modified rosin esters, rosin amide compounds, and amine salts of rosin.

The styrene-based resin is a polymer using a styrene-based monomer as a constituent monomer, and examples thereof include a polymer obtained by polymerizing a styrene-based monomer as a main component (50% by mass or more). Specifically, a homopolymer obtained by independently polymerizing styrene-based monomers, such as styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene and p-chlorostyrene, a copolymer obtained by copolymerizing two or more types of styrene-based monomers, and a copolymer obtained by copolymerizing a styrene-based monomer and another monomer that can be copolymerized with the styrene-based monomer.

Examples of the other monomer include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α, β-unsaturated carboxylic acids and acid anhydrides thereof such as maleic anhydride.

Among the cumarone-based resins, the cumarone indene resin is preferable. The cumarone indene resin is a resin containing cumarone and indene as monomer components constituting the skeleton (main chain) of the resin. Examples of the monomer component contained in the skeleton other than cumarone and indene include styrene, α-methylstyrene, methylindene, and vinyltoluene.

The content of the coumarone-indene resin is, for example, more than 1.0 parts by mass and less than 50.0 parts by mass with respect to 100 parts by mass of the rubber component.

The hydroxyl value (OH value) of the cumarone indene resin is, for example, more than 15 mgKOH/g and less than 150 mgKOH/g. The OH value is the amount of potassium hydroxide required to neutralize acetic acid bonded to a hydroxyl group when acetylating 1 g of the resin, and is expressed in milligrams. The OH value is a value measured by a potentiometric titration (JIS K 0070: 1992).

The softening point of the cumarone indene resin is, for example, higher than 30°C and lower than 160°C. The softening point is the temperature at which the ball drops when the softening point defined in JIS K 6220-1: 2001 is measured by a ring-ball type softening point measuring device.

Examples of the terpene-based resin include polyterpenes, terpene phenols, and aromatic-modified terpene resins. Polyterpenes are resins obtained by polymerizing terpene compounds, and their hydrogenated products. Terpene compounds are hydrocarbons represented by a composition of $(C_5H_8)_n$ and their oxygenated derivatives, and are compounds having a terpene, classified in monoterpenes ($C_{10}H_{16}$), sesquiterpene ($C_{15}H_{24}$), diterpenes ($C_{20}H_{32}$), etc., as a basic skeleton. Examples thereof include α-pinene, β-pinene, dipentene, limonene, myrcene, aloossimen, ocimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins, such as α-pinene resin, β-pinene resin, limonene resin, dipentene resin, and β-pinene/limonene resin, made from the above-mentioned terpene compound, and hydrogenated terpene resin obtained by hydrogenating the terpene resin can also be mentioned as an example. Examples of the terpene phenol include a resin obtained by copolymerizing the above-mentioned terpene compound and a phenol-based compound, and a resin obtained by hydrogenating the resin. Specifically, a resin obtained by condensing the above-mentioned terpene compound, phenolic compound and the formalin can be mentioned. Examples of the phenolic compound include phenol, bisphenol A, cresol, xylenol and the like. Examples of the aromatic-modified terpene resin include a resin obtained by modifying the terpene resin with an aromatic compound, and a resin obtained by hydrogenating the resin. The aromatic compound is not particularly limited as long as it has an aromatic ring, but for example, phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthol; styrene derivatives such as styrene, alkylstyrene, alkoxystyrene, and unsaturated hydrocarbon group-containing styrene; cumarone; inden; and the like can be mentioned.

The "C5 resin" refers to a resin obtained by polymerizing a C5 fraction. Examples of the C5 fraction include petroleum fractions having 4 to 5 carbon atoms equivalent to cyclopentadiene, pentene, pentadiene, isoprene, and the like. As the C5 petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms equivalent to vinyltoluene, alkylstyrene, indene, methyl indene and the like. As a specific example, a cumarone indene resin, a cumarone resin, an indene resin, and an aromatic vinyl-based resin are preferably used. As the aromatic vinyl resin, a homopolymer of $\alpha$-methylstyrene or styrene or a copolymer of $\alpha$-methylstyrene and styrene is preferable because it is economical, easy to process, and has excellent heat generation. A copolymer of $\alpha$-methylstyrene and styrene is more preferable. As the aromatic vinyl resin, for example, those commercially available from Clayton Co., Eastman Chemical Co., etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA Co., etc. can be used.

Although the acrylic resin is not particularly limited, for example, a solvent-free acrylic resin can be used.

As the solvent-free acrylic resin, a (meth) acrylic resin (polymer), synthesized by a high-temperature continuous polymerization method (high-temperature continuous lump polymerization method) (a method described in USP4,414,370, JP-A-S59-6207, JP-B-H5-58005, JP-A-H1-313522, USP5,010,166, Toagosei Annual Report TREND2000 No. 3, pp42-45, etc.) without using polymerization initiators, chain transfer agents, organic solvents, etc. as auxiliary raw materials as much as possible, can be mentioned. Note that, "(meth) acrylic" means meth acrylic and acrylic in the present disclosure.

Examples of the monomer component constituting the acrylic resin include (meta) acrylic acid derivatives such as (meth) acrylic acid, (meth) acrylic acid ester (alkyl ester, aryl ester, aralkyl ester, etc.), (meth) acrylamide, and (meth) acrylamide derivative.

As the monomer component constituting the acrylic resin, aromatic vinyl such as styrene, $\alpha$-methylstyrene, vinyltoluene, vinylnaphthalene, divinylbenzene, trivinylbenzene, divinylnaphthalene, and the like can be used, together with (meth) acrylic acid and/or (meth) acrylic acid derivative.

The acrylic resin may be a resin composed of only a (meth) acrylic component or a resin also having a component other than the (meth) acrylic component as a component. The acrylic resin may have a hydroxyl group, a carboxyl group, a silanol group or the like.

As the resin component, for example, products of Maruzen Petrochemical Co., Ltd., Sumitomo Bakelite Co., Ltd., Yasuhara Chemical Co., Ltd., Toso Co., Ltd., Rutgers Chemicals Co., Ltd., BASF, Arizona Chemical Co., Ltd., Nitto Chemical Co., Ltd., Nippon Catalyst Co., Ltd., JX Energy Co., Ltd., Arakawa Chemical Industry Co., Ltd., or Taoka Chemical Industry Co., Ltd. can be used.

(b-4) Organic acid cobalt

The rubber composition preferably contains organic acid cobalt. Since the organic acid cobalt plays a role of cross-linking the cord and the rubber, the adhesion between the cord and the rubber can be improved by containing this component.

Examples of organic acid cobalt include cobalt stearate, cobalt naphthenate, cobalt neodecanoate, and cobalt boron-3 neodecanoate.

The content of the organic acid cobalt is preferably 500 ppm or more, more preferably 700 ppm or more, and further preferably 900 ppm or more as the cobalt concentration in the rubber composition. On the other hand, it is preferably 1500 ppm or less, more preferably 1300 ppm or less. If the amount is too small, there is a risk that sufficient adhesion between the plated layer of the steel cord and the rubber cannot be ensured. On the other hand, if it is too large, the oxidation deterioration of the rubber becomes remarkable, and there is a possibility that the breaking properties deteriorate.

(b-5) Anti-reversion agent

The rubber composition preferably contains a reversion inhibitor as necessary. This suppresses reversion and improves durability. The content of the anti-reversion agent is preferably 0.1 parts by mass or more and 3 parts by mass or less, more preferably 0.2 parts by mass or more and 2.5 parts by mass or less, and further preferably 0.3 parts by mass or more and 2 parts by mass or less with respect to 100 parts by mass of the rubber component. As a specific anti-reversion agent, for example, Parkalink 900 (1,3-bis(citraconimidomethyl)benzene) manufactured by Flexsys can be used.

(b-6) Anti-aging agent

The rubber composition preferably contains an anti-aging agent. The content of the anti-aging agent is, for

example, more than 1 part by mass and less than 10 parts by mass with respect to 100 parts by mass of the rubber component.

Examples of the anti-aging agent include naphthylamine-based anti-aging agents such as phenyl-α-naphthylamine; diphenylamine-based anti-aging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N, N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, and styrenated phenol; and bis, tris, polyphenolic anti-aging agent such as tetrakis-[methylene-3-(3',5'-di-t-butyl-4'-hydroxyphenyl) propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-7) stearic acid

The rubber composition may contain stearic acid. The content of stearic acid is, for example, more than 0.5 parts by mass and less than 10.0 parts by mass with respect to 100 parts by mass of the rubber component. As the stearic acid, conventionally known ones can be used, and for example, products of NOF Corporation, Kao Corporation, Fujifilm Wako Pure Chemical Industries, Ltd., or Chiba Fatty Acid Co., Ltd. can be used.

(b-8) Zinc oxide

The rubber composition may contain zinc oxide. The content of zinc oxide is, for example, more than 0.5 parts by mass and less than 15 parts by mass with respect to 100 parts by mass of the rubber component. Conventionally known zinc oxide can be used. For example, products of Mitsui Mining & Smelting Co., Ltd., Toho Zinc Co., Ltd., HakusuiTech Co., Ltd., Shodo Chemical Industry Co., Ltd., Sakai Chemical Industry Co., Ltd., etc. can be used.

(b-9) Cross-linking agent and vulcanization accelerator

The rubber composition preferably contains a cross-linking agent such as sulfur. The content of the cross-linking agent is, for example, more than 0.1 part by mass and less than 10.0 parts by mass with respect to 100 parts by mass of the rubber component.

Examples of sulfur include powdered sulfur, precipitated sulfur, colloidal sulfur, insoluble sulfur, highly dispersible sulfur and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Industry Co., Ltd., Hosoi Chemical Industry Co., Ltd., etc. can be used.

Examples of the cross-linking agent other than sulfur include a vulcanizing agent containing a sulfur atom such as Tackylol V200 manufactured by Taoka Chemical Industry Co., Ltd., Duralink HTS (1,6-hexamethylene-sodium dithiosulfate dihydrate) manufactured by Flexsys and KA9188 (1,6-bis (N, N'-dibenzylthiocarbamoyldithio) hexane) manufactured by Lanxess; and an organic peroxide such as dicumyl peroxide.

The rubber composition preferably contains a vulcanization accelerator. The content of the vulcanization accelerator is, for example, more than 0.3 parts by mass and less than 10.0 parts by mass with respect to 100 parts by mass of the rubber component.

Examples of the vulcanization accelerator include thiazole-based vulcanization accelerator such as 2-mercaptobenzothiazole, di-2-benzothiazolyldisulfide, and N-cyclohexyl-2-benzothiazylsulfenamide; thiuram-based vulcanization accelerators such as tetramethylthiuram disulfide (TMTD), tetrabenzyl thiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and guanidine-based vulcanization accelerators such as diphenylguanidine, dioltotrilguanidine, and orthotrilbiguanidine can be mentioned. These may be used alone or in combination of two or more.

(b-10) Other

In addition to the above components, the rubber composition may further contain additives commonly used in the

tire industry, for example, fatty acid metal salts, carboxylic acid metal salts, organic peroxides, and the like. The content of these additives is, for example, more than 0.1 parts by mass and less than 200 parts by mass with respect to 100 parts by mass of the rubber component.

(2) Production of rubber composition

The rubber composition is produced by a general method, for example, by a manufacturing method including a base kneading step of kneading a rubber component with a filler such as carbon black, and a finish kneading step of kneading the kneaded product obtained in the base kneading step and a cross-linking agent.

The kneading can be performed using, for example, a known (closed) kneader such as a Banbury mixer, a kneader, or an open roll.

The kneading temperature of the base kneading step is, for example, higher than 50°C and lower than 200°C, and the kneading time is, for example, more than 30 seconds and less than 30 minutes. In the base kneading step, in addition to the above components, compounding agents conventionally used in the rubber industry, such as softeners including oil, stearic acid, zinc oxide, antiaging agents, waxes, vulcanization accelerators, etc., may be appropriately added and knead as needed.

In the finish kneading step, the kneaded product obtained in the base kneading step and the cross-linking agent are kneaded. The kneading temperature in the finish kneading step is, for example, higher than room temperature and lower than 80°C, and the kneading time is, for example, more than 1 minute and less than 15 minutes. In the finish kneading step, in addition to the above components, a vulcanization accelerator, zinc oxide and the like may be appropriately added and kneaded as needed.

2. Manufacture of belt members

The belt member can be produced by topping the obtained rubber composition on both sides of reinforcing cords (monofilament cords such as steel cords) arranged in parallel at predetermined intervals (50 cords/5 cm or more).

3. Manufacture of tires

The tire of the present invention can be produced as an unvulcanized tire by molding the belt member obtained above together with other tire members by a usual method on a tire building machine.

Specifically, the inner liner as a member to ensure the airtightness of the tire, the carcass as a member to withstand the load, impact and filling air pressure received by the tire, a belt member as a member to strongly tighten the carcass to increase the rigidity of the tread, and the like are wound on a molded drum, then both ends of the carcass are fixed to both side edges and a bead part as a member for fixing the tire to the rim is arranged to form a toroid shape, followed by pasting a tread to the central portion of the outer circumference and a sidewall to the outer side in the radial direction to form a side portion; and an unvulcanized tire is manufactured.

In the present embodiment, it is preferable that at least two belt layers be provided from the viewpoint of increasing the binding force to the tread during running and facilitating suppression of the growth of the outer diameter, as described above. At this time, the average distance D (mm) between the belt layers in the tread portion is preferably 0.6 mm or less. It is also preferable that the angle formed by the belt layers in the tread portion at the tire circumferential direction is 65° or less.

The angle of the steel cord is the angle of the steel cord with respect to the tire circumferential direction when the tire is not filled with air, and can be confirmed by peeling off the tread portion from the radially outer side of the tire.

Then, the produced unvulcanized tire is heated and pressurized in a vulcanizer to obtain a tire. The vulcanization step can be carried out by applying a known vulcanization means. The vulcanization temperature is, for example, higher than 120°C and lower than 200°C, and the vulcanization time is, for example, more than 5 minutes and less than 15 minutes.

At this time, the tire is formed into a shape that satisfies the above-described (formula 1) when installed on a standardized rim and having an internal pressure of 250 KPa.

Examples of the specific tires that can satisfy the above (formula 1) include tires with size notation such as 145/60R18, 145/60R19, 155/55R18, 155/55R19, 155/70R17, 155/70R19, 165/55R20, and 165/55R21. , 165/60R19, 165/65R19, 165/70R18, 175/55R19, 175/55R20, 175/55R22, 175/60R18, 185/55R19, 185/60R20, 195/50R20, and 195/55R20.

The tire of the present embodiment can be used as various types of tires classified into passenger car tires, truck and bus tires, motorcycle tires, etc. However, it is preferable to apply it to a pneumatic tire for passenger car, that is, a tire mounted on a four-wheeled vehicle and having a maximum load capacity of 1000 kg or less, among tires which satisfy (formula 1). By satisfying (formula 1), the tires can contribute more favorably for solving the problem in the present

invention, that is, a pneumatic tire which is sufficiently designed to achieve both low rolling resistance and steering stability is provided.

The above-mentioned maximum load capacity is a value about 50 to 100 kg smaller than the maximum load capacity defined for each tire in the standard system including the standard on which the tire is based, for example, the maximum load capacity based on the load index (LI) defined by the JATMA standard (Japan Automobile Tire Manufacturers Association standard). Specifically, it is calculated using the following two formulas based on the tire section width Wt (mm), the tire section height Ht (mm) and the tire outer diameter Dt (mm) when the tire is installed on a standardized rim, the internal pressure is set to 250 kPa, and no load is applied.

$$V\ (mm^3) = \{(Dt / 2)^2 - (Dt / 2 - Ht)^2\} \times \pi \times Wt$$

$$WL\ (kg) = 0.000011 \times V + 175$$

Note that V is the volume of the space occupied by the tire (virtual volume), and (Dt / 2 - Ht) is the rim diameter (mm).

The above maximum load capacity is not particularly limited as long as it is 1000 kg or less, but generally, as the maximum load capacity increases, the tire weight tends to increase and accordingly, the heat generation of the tire tends to increase, so it is preferably 900 kg or less, more preferably 800 kg or less, and further preferably 700 kg or less.

In addition, from the viewpoint of reducing heat build-up of the tire, the tire weight is preferably 20 kg or less, more preferably 15 kg or less, and further preferably 12 kg or less, 10 kg or less, and 8 kg or less. The term "tire weight" as used herein refers to the weight of the entire tire, including sealants, sponges, three-dimensional mesh structures, electronic parts, etc., if they are provided on the inner cavity surface of the tire. Moreover, the tire weight can be appropriately adjusted by the thickness and width of each member constituting the tire, the specific gravity of the rubber composition, the number of steel cords arranged in the belt reinforcing layer, the structure of the bead wires, and the like.

[EXAMPLES]

Hereinafter, the present invention will be described more specifically by examples.

1. Manufacture of rubber compositions for belts

First, a rubber composition for belts was produced.

(1) Compounding material

First, each compounding material shown below was prepared.

(a) Rubber component

NR: RSS3

(b) Compounding materials other than rubber components
(b-1) Carbon Black-1: Show Black N326 manufactured by Cabot Japan Co., Ltd. ($N_2SA$: $78m^2/g$)
(b-2) Carbon Black-2: Show Black N550 manufactured by Cabot Japan Co., Ltd. ($N_2SA$: $42m^2/g$)
(b-3) Curable resin component-1: PR12686 manufactured by Sumitomo Bakelite Co., Ltd. (Cashew oil-modified phenolic resin)
(b-4) Curable resin component-2: Sumikanol 620 manufactured by Taoka Chemical Industry Co., Ltd. (Modified resorcinol resin)
(b-5) Curing agent: Sumikanol 507 manufactured by Taoka Chemical Industry Co., Ltd. (methylene donor)
(b-6) Cobalt organic acid: DICNATE NBC-2 manufactured by DIC Corporation (Boron cobalt neodecanoate, cobalt content: 22.5% by mass)
(b-7) Zinc oxide: Zinc oxide No. 1 manufactured by Mitsui Mining & Smelting Co., Ltd.
(b-8) Anti-aging agent-1: Nocrack 6C manufactured by Ouchi Shinko Chemical Industry Co., Ltd.
(N-phenyl-N'-(1,3-dimethylbutyl)-p-phenylenediamine)
(b-9) Anti-aging agent -2: Antage RD manufactured by Kawaguchi Chemical Industry Co., Ltd. (2,2,4-trimethyl-1,2-dihydroquinoline)
(b-10) Stearic acid: Stearic acid "Tsubaki" manufactured by NOF Corporation
(b-11) Cross-linking agent, vulcanization accelerator, cross-linking aid

Sulfur: Powdered sulfur manufactured by Tsurumi Chemical Industry Co., Ltd.
Vulcanization accelerator: NOCCELER DZ manufactured by Ouchi Shinko Chemical Industry Co., Ltd. (N,N-dicyclohexyl-2-benzothiazolylsulfenamide)
Crosslinking aid: Duralink HTS manufactured by Flexsys Co. Ltd.

(2) Manufacture of rubber composition

Materials other than the curing agent, sulfur and vulcanization accelerator were kneaded at 150°C for 5 minutes using a Banbury mixer according to the formulation contents shown in Tables 1 to 4 to obtain a kneaded product. Each compounding quantity is a mass part.
Next, a curing agent, sulfur and a vulcanization accelerator were added to the resulting kneaded product, and the mixture was kneaded at 80°C for 5 minutes using an open roll to obtain a rubber composition for belts.

2. Manufacture of tires

First, steel cords having the configurations and outer diameters shown in Tables 1 to 4 were arranged with the ends (cords/5 cm) shown in Tables 1 to 4, and then the previously obtained belt rubber composition was coated on the both sides to prepare a belt member. At this time, the same amount of rubber was topped on the top and bottom so that the steel cord was arranged in the center of the thickness direction of the belt member; and the thickness was appropriately adjusted so that between steel cords within a pair of belt layers has an average distance D (mm) shown in Tables 1 to 4 in the tire after vulcanization.
After that, together with other tire members, the two layers were pasted together so that the steel cords in the belt member intersect each other at the angles shown in Tables 1 to 4 to form an unvulcanized tire. Press vulcanization was performed at 170°C for 10 minutes to produce test tires (Examples 1 to 12 and Comparative Examples 1 to 10) having sizes and weights shown in Tables 1 to 4.
In each test tire, the above-mentioned ($L_{80}$ /$L_0$) was 0.5, the total cross-sectional area of the circumferential grooves was 22% of the cross-sectional area of the tread portion, and the total volume of the lateral grooves, including lateral grooves having the groove width / groove depth of 0.65, was 3.5% of the tread volume.

3. Calculation of parameters

After that, the outer diameter Dt (mm) and cross-sectional width Wt (mm) of each test tire were obtained. At the same time, the rubber composition was cut out from between the belt layers of each test tire to prepare a rubber test piece for viscoelasticity measurement with a length of 40 mm and a width of 4 mm. Tan δ and E* were measured under conditions of 70°C, frequency of 10 Hz, initial strain of 5%, and dynamic strain rate of 1% using Eplexor series manufactured by GABO. The results are shown in Tables 1-4. For those using the same rubber composition, the viscoelasticity of the rubber composition was measured from each specification, the average value was obtained and the result are shown.
Then, $(Dt^2 \times \pi / 4) / Wt$, $[(\tan\delta / E^*) / e] \times 1000$, and $[(\tan\delta / E^*) \times D] \times 1000$ were calculated. The results are shown in Tables 1-4.

4. Performance evaluation test

(1) Evaluation of low rolling resistance

Each test tire was installed on all wheels of the vehicle (domestic FF vehicle, displacement 2000cc), filled with air so that the internal pressure became 250kPa, and then driven on the test course on the dry road surface at a speed of 80km/h. After making a 10km lap, the accelerator was released, and the distance from when the accelerator was turned off until the vehicle stopped was measured.
Then, the results in Comparative Example 10 was set to as 100, and the results were indexed based on the following formula to relatively evaluate the low rolling resistance. The larger the value, the longer the distance from when the accelerator is turned off until the vehicle stops and the smaller the rolling resistance in the steady state, showing excellent low rolling resistance, and excellent fuel efficiency.

$$\text{Low rolling resistance} = [(\text{Result of test tire}) / (\text{Result of Comparative Example 10})] \times 100$$

(2) Evaluation of steering stability

Each test tire was installed on all wheels of the vehicle (domestic FF vehicle, displacement 2000cc), filled with air so that the internal pressure became 250kPa, and then driven on the test course on the dry road surface at 40km/h and 120km/h. The change in handling performance due to changes in running speed was evaluated sensorily by the driver on a 5-point scale from 1 (feeling a large change) to 5 (feeling almost no change). Then, the total points of the evaluations by the 20 drivers were calculated.

Then, taking the result of Comparative Example 10 as 100, indexing was performed based on the following formula to evaluate steering stability. A larger value indicates better steering stability.

$$\text{Steering stability} = [(\text{Result of test tire}) / (\text{Result of Comparative Example 10})] \times 100$$

(3) Comprehensive evaluation

The evaluation results of (1) and (2) above were summed up to obtain a comprehensive evaluation.

(4) Evaluation results

The results of each evaluation are shown in Tables 1-4.

46

[Table 1]

| | Example 1 | Example 2 | Example 3 | Example 4 | Example 5 | Example 6 |
|---|---|---|---|---|---|---|
| Size | 195/50R17 | 195/50R17 | 195/50R17 | 195/50R17 | 195/50R17 | 185/45R18 |
| Weight (kg) | 6.7 | 6.7 | 6.6 | 6.7 | 6.6 | 6.2 |
| Formulation | | | | | | |
| NR | 100 | 100 | 100 | 100 | 100 | 100 |
| Carbon Black-1 | 55 | 55 | 55 | 55 | 55 | 55 |
| Crosslinking aid | 0.5 | 0.5 | 0.5 | 0.5 | 0.5 | 0.5 |
| Curable resin component-1 | 3 | 3 | 3 | 3 | 3 | 3 |
| Organic acid cobalt | 1.5 | 1.5 | 1.5 | 1.5 | 1.5 | 1.5 |
| Zinc oxide | 10 | 10 | 10 | 10 | 10 | 10 |
| Anti-aging agent-1 | 1 | 1 | 1 | 1 | 1 | 1 |
| Anti-aging agent-2 | 0.5 | 0.5 | 0.5 | 0.5 | 0.5 | 0.5 |
| Stearic acid | 1 | 1 | 1 | 1 | 1 | 1 |
| Sulfur | 7 | 7 | 7 | 7 | 7 | 7 |
| Curing agent | 1.5 | 1.5 | 1.5 | 1.5 | 1.5 | 1.5 |
| Vulcanization accelerator | 1.2 | 1.2 | 1.2 | 1.2 | 1.2 | 1.2 |
| Cords | | | | | | |
| Configuration | 1×1 | 1×1 | 1×1 | 1×1 | 1×1 | 1×1 |
| Outer diameter(mm) | 0.3 | 0.3 | 0.3 | 0.3 | 0.3 | 0.3 |
| Ends e (cords / 5cm) | 55 | 55 | 55 | 55 | 55 | 55 |

(continued)

| | | | | | | |
|---|---|---|---|---|---|---|
| Cords | | | | | | |
| Belt layer | | | | | | |
| Average distanoe D(mm) | 0.7 | 0.7 | 0.7 | 0.45 | 0.22 | 0.45 |
| Angle (°) | 100 | 60 | 46 | 46 | 46 | 46 |
| Parameter | | | | | | |
| tanδ | 0.13 | 0.13 | 0.13 | 0.13 | 0.13 | 0.13 |
| E* (MPa) | 9.4 | 9.4 | 9.4 | 9.4 | 9.4 | 9.4 |
| tanδ / E* | 0.014 | 0.014 | 0.014 | 0.014 | 0.014 | 0.014 |
| Dt (mm) | 628 | 629 | 627 | 629 | 628 | 623 |
| Wt (mm) | 201 | 201 | 200 | 200 | 200 | 183 |
| $(Dt^2 \times \pi / 4) / Wt$ | 1541 | 1546 | 1544 | 1554 | 1549 | 1666 |
| $[(\tan\delta / E^*)/e] \times 1000$ | 0.25 | 0.25 | 0.25 | 0.25 | 0.25 | 0.25 |
| $(\tan\delta / E^*) \times D \times 1000$ | 9.7 | 9.7 | 9.7 | 6.2 | 3.0 | 6.2 |
| Evaluation Results | | | | | | |
| Low rolling resistance | 105 | 112 | 118 | 120 | 123 | 125 |
| Steering stability | 108 | 105 | 103 | 108 | 113 | 113 |
| Comprehensive evaluation | 213 | 217 | 221 | 228 | 236 | 238 |

[Table 2]

| | Example 7 | Example 8 | Example 9 | Example 10 | Example 11 | Example 12 |
|---|---|---|---|---|---|---|
| Size | 185/45R18 | 185/45R18 | 185145R18 | 185/45R18 | 175140R19 | 155/50R19 |
| Weight (kg) | 6.4 | 6.6 | 6.4 | 6.3 | 6.2 | 5.9 |
| Formulation | | | | | | |
| NR | 100 | 100 | 100 | 100 | 100 | 100 |
| Carbon Black-1 | 55 | 55 | 55 | | | |
| Carbon Black-2 | | | | 55 | 55 | 55 |
| Crosslinking aid | 0.5 | 0.5 | 1.2 | 1.2 | 1.2 | 1.2 |
| Curable resin component-1 | 3 | 3 | | | | |
| Curable resin component-2 | | | 5 | 5 | 5 | 5 |
| Organic acid cobalt | 1.5 | 1.5 | 1.5 | 1.5 | 1.5 | 1.5 |
| Zinc oxide | 10 | 10 | 10 | 11 | 11 | 11 |
| Anti-aging agent-1 | 1 | 1 | 1 | 1 | 1 | 1 |
| Anti-aging agent-2 | 0.5 | 0.5 | 0.5 | 0.5 | 0.5 | 0.5 |
| Stearic acid | 1 | 1 | 1 | 1 | 1 | 1 |
| Sulfur | 7 | 7 | 7 | 7 | 7 | 7 |
| Curing agent | 1.5 | 1.5 | 3.0 | 3.0 | 3.0 | 3.0 |
| Vulcanization accelerator | 1.2 | 1.2 | 1.2 | 1.2 | 1.2 | 1.2 |
| Cords | | | | | | |
| Configuration | 1×1 | 1×1 | 1×1 | 1×1 | 1×1 | 1×1 |
| Outer diameter(mm) | 0.3 | 0.3 | 0.3 | 0.3 | 0.3 | 0.3 |

(continued)

| | | | | | | |
|---|---|---|---|---|---|---|
| Cords | | | | | | |
| Ends e (cords / 5cm) | 75 | 90 | 75 | 75 | 75 | 75 |
| Belt layer | | | | | | |
| Average distance D(mm) | 0.45 | 0.45 | 0.45 | 0.45 | 0.45 | 0.45 |
| Angle (°) | 46 | 46 | 46 | 46 | 46 | 46 |
| Parameter | | | | | | |
| tanδ | 0.13 | 0.13 | 0.10 | 0.08 | 0.08 | 0.08 |
| E* (MPa) | 9.4 | 9.4 | 10.5 | 8.7 | 8.7 | 8.7 |
| tan δ / E* | 0.014 | 0.014 | 0.010 | 0.009 | 0.009 | 0.009 |
| Dt (mm) | 624 | 624 | 623 | 622 | 624 | 640 |
| Wt (mm) | 184 | 183 | 183 | 183 | 175 | 155 |
| $(Dt^2 \times \pi / 4) / Wt$ | 1662 | 1671 | 1666 | 1660 | 1748 | 2075 |
| $[(\tan\delta / E^*)/e] \times 1000$ | 0.18 | 0.15 | 0.13 | 0.12 | 0.12 | 0.12 |
| $(\tan\delta / E^*) \times D \times 1000$ | 6.2 | 6.2 | 4.3 | 4.1 | 4.1 | 4.1 |
| Evaluation Results | | | | | | |
| Low rolling resistance | 130 | 133 | 135 | 138 | 140 | 145 |
| Steering stability | 117 | 122 | 125 | 130 | 135 | 140 |
| Comprehensive evaluation | 247 | 255 | 260 | 268 | 275 | 285 |

[Table 3]

| | Comparative example | | | | | |
|---|---|---|---|---|---|---|
| | 1 | 2 | 3 | 4 | 5 | 6 |
| Size | 205/55R16 | 195/50R17 | 205/55R16 | 205/55R16 | 195/50R17 | 205/55R16 |
| Weight (kg) | 7.2 | 6.8 | 7.1 | 7.2 | 6.8 | 7.2 |
| Formulation | | | | | | |
| NR | 100 | 100 | 100 | 100 | 100 | 100 |
| Carbon Black-1 | 55 | 55 | 55 | 55 | 55 | 55 |
| Crosslinking aid | 0.5 | 0.5 | 0.5 | 0.5 | 0.5 | 0.5 |
| Curable resin component-1 | 3 | 3 | 3 | 3 | 3 | 3 |
| Organic acid cobalt | 1.5 | 1.5 | 1.5 | 1.5 | 1.5 | 1.5 |
| Zinc oxide | 10 | 10 | 10 | 10 | 10 | 10 |
| Anti-aging agent-1 | 1 | 1 | 1 | 1 | 1 | 1 |
| Anti-aging agent-2 | 0.5 | 0.5 | 0.5 | 0.5 | 0.5 | 0.5 |
| Stearic acid | 1 | 1 | 1 | 1 | 1 | 1 |
| Sulfur | 7 | 7 | 7 | 7 | 7 | 7 |
| Curing agent | 1.5 | 1.5 | 1.5 | 1.5 | 1.5 | 1.5 |
| Vulcanization accelerator | 1.2 | 1.2 | 1.2 | 1.2 | 1.2 | 1.2 |
| Cords | | | | | | |
| Configuration | 1×2 | 1×2 | 1×2 | 1×1 | 1×1 | 1×1 |
| Outer diameter(mm) | 0.59 | 0.59 | 0.59 | 0.59 | 0.3 | 0.3 |

(continued)

| | | | | | | |
|---|---|---|---|---|---|---|
| Cords | | | | | | |
| Ends e (cords / 5cm) | 42 | 42 | 55 | 42 | 42 | 55 |
| Belt layer | | | | | | |
| Average distance D(mm) | 0.7 | 0.7 | 0.7 | 0.7 | 0.7 | 0.7 |
| Angle (°) | 100 | 100 | 100 | 100 | 100 | 100 |
| Parameter | | | | | | |
| tanδ | 0.13 | 0.13 | 0.13 | 0.13 | 0.13 | 0.13 |
| E* (MPa) | 9.4 | 9.4 | 9.4 | 9.4 | 9.4 | 9.4 |
| tan δ / E* | 0.014 | 0.014 | 0.014 | 0.014 | 0.014 | 0.014 |
| Dt (mm) | 631 | 627 | 630 | 631 | 628 | 630 |
| Wt(mm) | 212 | 201 | 213 | 213 | 202 | 213 |
| $(Dt^2 \times \pi / 4) / Wt$ | 1475 | 1536 | 1463 | 1468 | 1533 | 1463 |
| $[(\tan\delta / E^*) / e] \times 1000$ | 0.33 | 0.33 | 0.25 | 0.33 | 0.33 | 0.25 |
| $(\tan\delta / E^*) \times D \times 1000$ | 9.7 | 9.7 | 9.7 | 9.7 | 9.7 | 9.7 |
| Evaluation Results | | | | | | |
| Low rolling resistance | 80 | 83 | 85 | 86 | 88 | 92 |
| Steering stability | 80 | 83 | 82 | 85 | 86 | 85 |
| Comprehensive evaluation | 160 | 166 | 167 | 171 | 174 | 177 |

[Table 4]

| | Comparative Example | | | |
|---|---|---|---|---|
| | 7 | 8 | 9 | 10 |
| Size | 205/55R16 | 205/55R16 | 205/55R16 | 205/55R16 |
| Weight (kg) | 7.3 | 7.1 | 7.2 | 7.3 |
| Formulation | | | | |
| NR | 100 | 100 | 100 | 100 |
| Carbon Black-1 | 55 | 55 | | |
| Carbon Black-2 | | | 55 | 55 |
| Crosslinking aid | 0.5 | 0.5 | 1.2 | 1.2 |
| Curable resin component-1 | 3 | 3 | | |
| Curable resin component-2 | | | 5 | 5 |
| Organic acid cobalt | 1.5 | 1.5 | 1.5 | 1.5 |
| Zinc oxide | 10 | 10 | 11 | 11 |
| Anti-aging agent-1 | 1 | 1 | 1 | 1 |
| Anti-aging agent-2 | 0.5 | 0.5 | 0.5 | 0.5 |
| Stearic acid | 1 | 1 | 1 | 1 |
| Sulfur | 7 | 7 | 7 | 7 |
| Curing agent | 1.5 | 1.5 | 3.0 | 3.0 |
| Vulcanization accelerator | 1.2 | 1.2 | 1.2 | 1.2 |

(continued)

| Cords | | | | |
|---|---|---|---|---|
| Configuration | 1×1 | 1×1 | 1×1 | 1×1 |
| Outer diameter(mm) | 0.3 | 0.3 | 0.3 | 0.3 |
| Ends e (cords / 5cm) | 55 | 55 | 55 | 75 |
| Belt layer | | | | |
| Average distance D(mm) | 0.45 | 0.45 | 0.45 | 0.45 |
| Angle (°) | 100.0 | 60.0 | 60.0 | 60.0 |
| Parameter | | | | |
| tanδ | 0.13 | 0.13 | 0.08 | 0.08 |
| E* (MPa) | 6.5 | 6.5 | 8.7 | 8.7 |
| tanδ / E* | 0.020 | 0.020 | 0.009 | 0.009 |
| Dt (mm) | 631 | 630 | 630 | 631 |
| Wt(mm) | 214 | 213 | 214 | 214 |
| $(Dt^2 \times \pi / 4) / Wt$ | 1461 | 1463 | 1457 | 1461 |
| [(tanδ / E*) / e] × 1000 | 0.36 | 0.36 | 0.17 | 0.12 |
| (tanδ / E*) × D × 1000 | 9.0 | 9.0 | 4.1 | 4.1 |
| Evaluation Results | | | | |
| Low rolling resistance | 92 | 95 | 98 | 100 |
| Steering stability | 87 | 85 | 90 | 100 |
| Comprehensive evaluation | 179 | 180 | 188 | 200 |

From the results shown in Tables 1 to 4, it can be seen that a pneumatic tire that satisfactorily achieves both low rolling resistance and steering stability can be provided, when the tire has a belt layer in which a rubber composition is coated on monofilament cords arranged at 50 cords / 5 cm or more and satisfies (formula 1).

Further, it can be seen that a pneumatic tire that further achieves both low rolling resistance and steering stability can be provided by controlling by (formula 2) to (formula 6) and by appropriately controlling the outer diameter of the cord.

Although the present invention has been described above based on the embodiments, the present invention is not limited to the above embodiments but only to the scope of the appended claims.

## Claims

**1.** A pneumatic tire having a tread portion and a belt layer, wherein

the reinforcing cords in the belt layer are composed of monofilament cords arranged in a tire width direction at 50 cords/5 cm or more in a cross section of the belt layer in the tire radial direction; and
the cross-sectional width Wt (mm) and the outer diameter Dt (mm) of the tire, which is installed on a standardized rim and has an internal pressure of 250 kPa, satisfy the following (formula 1)

$$1660 \leqq (Dt^2 \times \pi/4) / Wt \qquad \text{(formula 1)},$$

wherein at least two belt layers are provided,
**characterized in that**
in at least one pair of radially adjacent belt layers of the tire,
the complex modulus E* (MPa) of the rubber composition covering the reinforcing cord measured under conditions of temperature of 70°C, initial strain of 5%, dynamic strain of ±1%, frequency of 10 Hz, deformation mode: extension,

the loss tangent (tan δ) of the rubber composition covering the reinforcing cord measured under conditions of temperature of 70°C, initial strain of 5%, dynamic strain of ±1%, frequency of 10 Hz, deformation mode: tensile, and

the average distance D (mm) between cords in each belt layer in the tread portion

satisfy the following (formula 6).

$$(\tan \delta / E^*) \times D \times 1000 \leqq 8.0 \qquad \text{(formula 6)}$$

**2.** The pneumatic tire according to claim 1, which satisfy the following (formula 3).

$$1700 \leqq (Dt^2 \times \pi / 4) / Wt \qquad \text{(formula 3)}$$

**3.** The pneumatic tire according to any one of claims 1 or 2, wherein the cord made of the monofilament has a cord outer diameter of 0.1 mm or more and 0.5 mm or less.

**4.** The pneumatic tire according to any one of claims 1-3, wherein the arrangement number e of the monofilament cords per 5 cm in the tire width direction (cords / 5 cm) is 75 cords / 5 cm or more.

**5.** The pneumatic tire according to any one of claims 1-4, wherein the reinforcing cord is coated with a rubber composition, and

the complex modulus E* (MPa) of the rubber composition measured under conditions of temperature of 70°C, initial strain of 5%, dynamic strain of ±1%, frequency of 10 Hz, deformation mode: extension,

the loss tangent (tan δ) of the rubber composition measured under conditions of temperature of 70°C, initial strain of 5%, dynamic strain of ±1%, frequency of 10 Hz, deformation mode: tensile, and

the arrangement number e (cords) of the reinforcing cords per 5 cm in the tire width direction in the tread portion

satisfy the following (formula 4).

$$[(\tan \delta / E^*) / e] \times 1000 \leqq 0.2 \qquad \text{(formula 4)}$$

**6.** The pneumatic tire according to claim 5, which satisfy the following (formula 5).

$$[(\tan \delta / E^*) / e] \times 1000 \leqq 0.12 \qquad \text{(formula 5)}$$

**7.** The pneumatic tire according to claim 5 or 6, wherein the (tan δ / E*) is 0.002 or more and 0.017 or less.

**8.** The pneumatic tire according to any one of claims 1-7, wherein at least two belt layers are provided, and, in at least one pair of radially adjacent belt layers of the tire, the average distance D (mm) between cords in each belt layer in the tread portion is 0.6 mm or less.

**9.** The pneumatic tire according to any one of claims 1-8, wherein at least two belt layers are provided; and, in at least one pair of radially adjacent belt layers of the tire, the angle formed by the cords in each belt layer in the tread portion at the tire circumferential direction is 65° or less.

**10.** The pneumatic tire according to any one of claims 1-9, wherein, in the belt layer, the rubber composition covering the reinforcing cords contains 60 parts by mass or less of carbon black with respect to 100 parts by mass of the rubber component.

**11.** The pneumatic tire according to any one of claims 1-10, wherein the tread portion has a circumferential groove extending continuously in the tire circumferential direction, and the ratio ($L_{80}$ / $L_0$) of the groove width $L_{80}$ at 80% of the maximum depth of the circumferential groove to the groove width $L_0$ of the circumferential groove on the contact surface of the tread portion is 0. 2 or more and 0.7 or less.

**12.** The pneumatic tire according to any one of claims 1-11, wherein the tread portion has a plurality of circumferential grooves extending continuously in the tire circumferential direction, and the total cross-sectional area of the plurality of circumferential grooves is 10% or more and 30% or less of the cross-sectional area of the tread portion.

**13.** The pneumatic tire according to any one of claims 1-12, wherein the tread portion has a plurality of lateral grooves extending in the axial direction of the tire, and the total volume of the plurality of lateral grooves is 2.0% or more and 5.0% or less of the volume of the tread portion.

**14.** The pneumatic tire according to any one of claims 1-13, wherein the tread portion has a plurality of lateral grooves extending in the axial direction of the tire, and the plurality of lateral grooves includes a lateral groove having a ratio of groove width Gw to groove depth Gd (Gw / Gd) of 0.50 or more and 0.80 or less.

**15.** The pneumatic tire according to any one of claims 1-14, wherein the cross-sectional width Wt (mm) of the tire is less than 200 mm.

**16.** The pneumatic tire according to any one of claims 1-15, wherein, when the outer diameter of the tire is Dt (mm) and the cross-sectional height is Ht (mm), ($Dt - 2 \times Ht$) is 450 (mm) or more and less than 560 (mm).

**17.** The pneumatic tire according to any one of claims 1-16, which is a passenger car tire.

**Patentansprüche**

**1.** Pneumatischer Reifen, der einen Laufflächenabschnitt und eine Gurtlage hat, wobei

die Verstärkungskorde in der Gurtlage aus Monofilamentkorden aufgebaut sind, die in einer Reifenbreitenrichtung bei 50 Korden / 5 cm oder mehr in einem Querschnitt der Gurtlage in der Reifenradialrichtung angeordnet sind; und
die Querschnittsbreite Wt (mm) und der Außendurchmesser Dt (mm) des Reifens, der an einer standardisierten Felge installiert ist und einen Innendruck von 250 kPa hat, die folgende (Formel 1) erfüllen

$$1660 \leqq (Dt^2 \times \pi/4) / Wt \qquad \text{(Formel 1)},$$

wobei mindestens zwei Gurtlagen vorgesehen sind,
**dadurch gekennzeichnet, dass**
bei mindestens einem Paar radial benachbarter Gurtlagen des Reifens
der komplexe Modul E* (MPa) der Gummizusammensetzung, die den Verstärkungskord bedeckt, gemessen unter Bedingungen einer Temperatur von 70 °C, einer Initialdehnung von 5 %, einer dynamischen Dehnung von ± 1%, einer Frequenz von 10 Hz und einem Verformungsmodus: Verlängerung,
der Verlusttangens (tan δ) der Gummizusammensetzung, die den Verstärkungskord bedeckt, gemessen unter Bedingungen einer Temperatur von 70 °C, einer initialen Dehnung von 5 %, einer dynamischen Dehnung von ±1 %, einer Frequenz von 10 Hz und einem Verformungsmodus: Zug, und
die Durchschnittsentfernung D (mm) zwischen Korden in jeder Gurtlage in dem Laufflächenabschnitt
die folgende (Formel 6) erfüllen

$$(\tan \delta / E^*) \times D \times 1000 \leqq 8{,}0 \qquad \text{(Formel 6)}.$$

**2.** Pneumatischer Reifen gemäß Anspruch 1, der die folgende (Formel 3) erfüllt

$$1700 \leqq (Dt^2 \times \pi / 4) / Wt \qquad \text{(Formel 3)}.$$

**3.** Pneumatischer Reifen gemäß einem der Ansprüche 1 oder 2, wobei der aus dem Monofilament angefertigte Kord einen Kordaußendurchmesser von 0,1 mm oder mehr und 0,5 mm oder weniger hat.

**4.** Pneumatischer Reifen gemäß einem der Ansprüche 1 bis 3, wobei die Anordnungsanzahl e der Monofilamentkorde pro 5 cm in der Reifenbreitenrichtung (Korde/5 cm) 75 Korde/5 cm oder mehr ist.

5. Pneumatischer Reifen gemäß einem der Ansprüche 1 bis 4, wobei der Verstärkungskord mit einer Gummizusammensetzung beschichtet ist, und

der komplexe Modul E* (MPa) der Gummizusammensetzung, gemessen unter Bedingungen einer Temperatur von 70 °C, einer initialen Dehnung von 5 %, einer dynamischen Dehnung von ± 1%, einer Frequenz von 10 Hz und einem Verformungsmodus: Verlängerung,
der Verlusttangens (tan δ) der Gummizusammensetzung, gemessen unter Bedingungen einer Temperatur von 70 °C, einer initialen Dehnung von 5 %, einer dynamischen Dehnung von ±1 %, einer Frequenz von 10 Hz und einem Verformungsmodus: Zug, und
die Anordnungsanzahl e (Korde) der Verstärkungskorde pro 5 cm in der Reifenbreitenrichtung in dem Laufflächenabschnitt
die folgende (Formel 4) erfüllen

$$[(\tan\delta / E^*) / e] \times 1000 \leqq 0{,}2 \qquad \text{(Formel 4).}$$

6. Pneumatischer Reifen gemäß Anspruch 5, der die folgende (Formel 5) erfüllt

$$[(\tan\delta / E^*) / e] \times 1000 \leqq 0{,}12 \qquad \text{(Formel 5).}$$

7. Pneumatischer Reifen gemäß Anspruch 5 oder 6, wobei (tan δ / E*) 0,002 oder mehr und 0,017 oder weniger ist.

8. Pneumatischer Reifen gemäß einem der Ansprüche 1 bis 7, wobei mindestens zwei Gurtlagen vorgesehen sind und bei mindestens einem Paar radial benachbarter Gurtlagen des Reifens die Durchschnittsentfernung D (mm) zwischen Korden in jeder Gurtlage in dem Laufflächenabschnitt 0,6 mm oder weniger ist.

9. Pneumatischer Reifen gemäß einem der Ansprüche 1 bis 8, wobei mindestens zwei Gurtlagen vorgesehen sind und bei mindestens einem Paar radial benachbarter Gurtlagen des Reifens der Winkel, der durch die Korde in jeder Gurtlage in dem Laufflächenabschnitt an der Reifenumfangsrichtung ausgebildet ist, 65° oder weniger ist.

10. Pneumatischer Reifen gemäß einem der Ansprüche 1 bis 9, wobei in der Gurtlage die Gummizusammensetzung, die die Verstärkungskorde bedeckt, 60 Massenanteile oder weniger Ruß bezüglich 100 Massenanteilen der Gummikomponente enthält.

11. Pneumatischer Reifen gemäß einem der Ansprüche 1 bis 10, wobei der Laufflächenabschnitt eine Umfangsnut hat, die sich kontinuierlich in der Reifenumfangsrichtung erstreckt, und das Verhältnis ($L_{80}$ / $L_0$) der Nutbreite $L_{80}$ bei 80 % der Maximaltiefe der Umfangsnut zu der Nutbreite $L_0$ der Umfangsnut an der Kontaktfläche des Laufflächenabschnitts 0,2 oder mehr und 0,7 oder weniger ist.

12. Pneumatischer Reifen gemäß einem der Ansprüche 1 bis 11, wobei der Laufflächenabschnitt eine Vielzahl Umfangsnuten hat, die sich kontinuierlich in der Reifenumfangsrichtung erstrecken, und die Gesamtquerschnittsfläche der Vielzahl Umfangsnuten 10 % oder mehr und 30 % oder weniger der Querschnittsfläche des Laufflächenabschnitts ist.

13. Pneumatischer Reifen gemäß einem der Ansprüche 1 bis 12, wobei der Laufflächenabschnitt eine Vielzahl Lateralnuten hat, die sich in der Axialrichtung des Reifens erstrecken, und das Gesamtvolumen der Vielzahl Lateralnuten 2,0 % oder mehr und 5,0 % oder weniger des Volumens des Laufflächenabschnitts ist.

14. Pneumatischer Reifen gemäß einem der Ansprüche 1 bis 13, wobei der Laufflächenabschnitt eine Vielzahl Lateralnuten hat, die sich in der Axialrichtung des Reifens erstrecken, und die Vielzahl Lateralnuten eine Lateralnut umfasst, die ein Verhältnis einer Nutbreite Gw zu einer Nuttiefe Gd (Gw/Gd) von 0,50 oder mehr und 0,80 oder weniger hat.

15. Pneumatischer Reifen gemäß einem der Ansprüche 1 bis 14, wobei die Querschnittsbreite Wt (mm) des Reifens kleiner ist als 200 mm.

16. Pneumatischer Reifen gemäß einem der Ansprüche 1 bis 15, wobei, wenn der Außendurchmesser des Reifens Dt (mm) ist und die Querschnittshöhe Ht (mm) ist, (Dt - 2 × Ht) 450 (mm) oder mehr und weniger als 560 (mm) ist.

**17.** Pneumatischer Reifen gemäß einem der Ansprüche 1 bis 16, der ein Personenkraftfahrzeugreifen ist.

**Revendications**

**1.** Pneumatique ayant une partie bande de roulement et une couche de ceinture, dans lequel les câbles de renforcement dans la couche de ceinture sont composés de câbles monofilaments disposés dans une direction de la largeur du pneu à 50 câbles/5 cm ou plus dans une section transversale de la couche de ceinture dans la direction radiale du pneu ; et

la largeur en coupe transversale Wt (mm) et le diamètre extérieur Dt (mm) du pneu, qui est monté sur une jante normalisée et a une pression interne de 250 kPa, répondent à la formule 1 suivante :

$$1660 \leqq (Dt^2 \times \pi/4) / Wt \text{ (formule 1)},$$

dans lequel au moins deux couches de ceinture sont prévues,
**caractérisé en ce que**,
dans au moins une paire de couches de ceinture radialement adjacentes du pneu,
le module complexe E* (MPa) de la composition de caoutchouc recouvrant le câble de renforcement, mesuré avec pour conditions une température de 70 °C, une déformation initiale de 5 %, une déformation dynamique de ±1 %, une fréquence de 10 Hz, un mode de déformation par extension,
le facteur de dissipation diélectrique (tan δ) de la composition de caoutchouc recouvrant le câble de renforcement, mesuré avec pour conditions une température de 70 °C, une déformation initiale de 5 %, une déformation dynamique de ±1 %, une fréquence de 10 Hz, un mode de déformation par traction, et
la distance moyenne D (mm) entre câbles dans chaque couche de ceinture dans la partie bande de roulement répondent à la formule 6 suivante :

$$(\tan \delta / E^*) \times D \times 1000 \leqq 8{,}0 \text{ (formule 6)}.$$

**2.** Pneumatique selon la revendication 1, qui répond à la formule 3 suivante :

$$1700 \leqq (Dt^2 \times \pi / 4) / Wt \quad \text{(formule 3)}.$$

**3.** Pneumatique selon l'une quelconque des revendications 1 et 2, dans lequel le câble constitué du monofilament a un diamètre extérieur de câble de 0,1 mm ou plus et 0,5 mm ou moins.

**4.** Pneumatique selon l'une quelconque des revendications 1 à 3, le nombre d'agencement e des câbles monofilaments sur 5 cm dans la direction de la largeur du pneu (câbles / 5 cm) étant de 75 câbles / 5 cm ou plus.

**5.** Pneumatique selon l'une quelconque des revendications 1 à 4, dans lequel le câble de renforcement est revêtu d'une composition de caoutchouc, et

le module complexe E* (MPa) de la composition de caoutchouc, mesuré avec pour conditions une température de 70 °C, une déformation initiale de 5 %, une déformation dynamique de ±1 %, une fréquence de 10 Hz, un mode de déformation par extension,
le facteur de dissipation diélectrique (tan δ) de la composition de caoutchouc, mesurée avec pour conditions une température de 70 °C, une déformation initiale de 5 %, une déformation dynamique de ±1 %, une fréquence de 10 Hz, un mode de déformation par traction, et
le nombre d'agencement e (câbles) des câbles de renforcement sur 5 cm dans la direction de la largeur du pneu dans la partie bande de roulement
répondent à la formule 4 suivante :

$$[(\tan \delta / E^*) / e] \times 1000 \leqq 0{,}2 \text{ (formule 4)}.$$

**6.** Pneumatique selon la revendication 5, qui répond à la formule 5 suivante :

$$[(\tan \delta / E^*) / e] \times 1000 \leqq 0{,}12 \text{ (formule 5)}.$$

**7.** Pneumatique selon la revendication 5 ou 6, dans lequel ($\tan \delta / E^*$) vaut 0,002 ou plus et 0,017 ou moins.

**8.** Pneumatique selon l'une quelconque des revendications 1 à 7, dans lequel au moins deux couches de ceinture sont prévues et, dans au moins une paire de couches de ceinture radialement adjacentes du pneu, la distance moyenne D (mm) entre câbles dans chaque couche de ceinture dans la partie bande de roulement est de 0,6 mm ou moins.

**9.** Pneumatique selon l'une quelconque des revendications 1 à 8, dans lequel au moins deux couches de ceinture sont prévues et, dans au moins une paire de couches de ceinture radialement adjacentes du pneu, l'angle formé par les câbles dans chaque couche de ceinture dans la partie bande de roulement dans la direction circonférentielle du pneu est de 65° ou moins.

**10.** Pneumatique selon l'une quelconque des revendications 1 à 9 dans lequel, dans la couche de ceinture, la composition de caoutchouc recouvrant les câbles de renforcement contient 60 parties en masse ou moins de noir de carbone pour 100 parties en masse du composant caoutchouteux.

**11.** Pneumatique selon l'une quelconque des revendications 1 à 10, la partie bande de roulement comportant une rainure circonférentielle s'étendant de façon continue dans la direction circonférentielle du pneu, et le rapport ($L_{80} / L_0$) entre la largeur de rainure $L_{80}$ à 80 % de la profondeur maximale de la rainure circonférentielle et la largeur de rainure $L_0$ de la rainure circonférentielle sur la surface de contact de la partie bande de roulement valant 0, 2 ou plus et 0,7 ou moins.

**12.** Pneumatique selon l'une quelconque des revendications 1 à 11, la partie bande de roulement comportant une pluralité de rainures circonférentielles s'étendant de façon continue dans la direction circonférentielle du pneu, et l'aire de section transversale totale de la pluralité de rainures circonférentielles représentant 10 % ou plus et 30 % ou moins de l'aire de section transversale de la partie bande de roulement.

**13.** Pneumatique selon l'une quelconque des revendications 1 à 12, la partie bande de roulement comportant une pluralité de rainures latérales s'étendant dans la direction axiale du pneu, et le volume total de la pluralité de rainures latérales représentant 2,0 % ou plus et 5,0 % ou moins du volume de la partie bande de roulement.

**14.** Pneumatique selon l'une quelconque des revendications 1 à 13, la partie bande de roulement comportant une pluralité de rainures latérales s'étendant dans la direction axiale du pneu, et la pluralité de rainures latérales incluant une rainure latérale avec un rapport entre largeur de rainure Gw et profondeur de rainure Gd (Gw / Gd) de 0,50 ou plus et 0,80 ou moins.

**15.** Pneumatique selon l'une quelconque des revendications 1 à 14, la largeur en coupe transversale Wt (mm) du pneu étant inférieure à 200 mm.

**16.** Pneumatique selon l'une quelconque des revendications 1 à 15 dans lequel, lorsque le diamètre extérieur du pneu est Dt (mm) et la hauteur en coupe transversale est Ht (mm), ($Dt - 2 \times Ht$) vaut 450 (mm) ou plus et moins de 560 (mm).

**17.** Pneumatique selon l'une quelconque des revendications 1 à 16, qui est un pneu de voiture particulière.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019089911 A
- WO 2018186367 A
- JP 2019206643 A
- JP 2008189048 A
- JP 2016210388 A
- US 2014228495 A1
- JP 6769573 B
- US 5858137 A
- US 4414370 A
- JP S596207 A
- JP H558005 B
- JP H1313522 A
- US 5010166 A


### Non-patent literature cited in the description


- **TOAGOSEI**. *Annual Report TREND2000*, vol. 3, 42-45